# EUROPEAN PATENT SPECIFICATION

(11) **EP 0 797 785 B1**
(45) Date of publication and mention of the grant of the patent: **10.05.2000**
(21) Application number: 95939119.4
(22) Date of filing: 09.11.1995
(51) Int. Cl.: C08F 220/30, C08F 2/44, C08K 5/357, C08K 5/15

(54) **TEMPERATURE STABLE AND SUNLIGHT PROTECTED PHOTOCHROMIC ARTICLES**
TEMPERATURSTABILE UND SONNENLICHTGESCHÜTZTE PHOTOCHROME ARTIKEL
ARTICLES PHOTOCHROMIQUES THERMOSTABLES ET PROTEGES CONTRE LA LUMIERE SOLAIRE

(30) Priority: 12.12.1994 FR 9414933
(43) Date of publication of application: 01.10.1997
(73) Proprietor: Corning Incorporated, Corning, New York 14831 (US)
(72) Inventor: FLORENT, Frederic, Henri, F-77210 Samoreau (FR); HENRY, David, F-91240 Saint-Michel-sur-Orge (FR); VACHET, André, Jean, F-77690 La Genevraye (FR); VIAL, Jacques, Jean, F-77123 Noisy-sur-Ecole (FR)
(74) Representative: Le Roux, Martine
(86) International application number: US9514652
(87) International publication number: WO9618926

(56) References cited:
- EP-A- 0 227 337
- EP-A- 0 629 656
- WO-A-94/04952
- DE-A- 4 325 154
- JP-A- 4 039 382
- US-A- 4 725 631
- US-A- 4 931 220
- US-A- 5 246 989
- US-A- 5 442 022

## Description

### Field of the Invention

The invention relates to new photochromic transparent organic materials with a high refractive index, to a process for their preparation, and to the articles made of these materials.

### Background of the Invention

It is difficult to find a photochromic material allowing for the production of an ophthalmic lens whose transmittance varies as a function of the lighting. Outside of their photochromic properties (i.e., colorability, rapid darkening and lightening kinetics, acceptable durability, etc.), such lenses are generally made by the use of appropriate mixtures of photochromic compounds such as spirooxazines and chromenes. The polymer matrixes which are used, though thermally crosslinked, have a low glass transition point, generally lower than that of CR39®, a reference ophthalmic resin consisting of diethylene glycol bis(allyl carbonate) available from PPG Industries, so as to have rapid photochromic kinetics. Moreover, these polymers generally have a relatively low refractive index (<1.54).

The majority of these thermally crosslinked matrixes are obtained by radical polymerization (i.e., polymerization which most often can only be carried out provided that one uses initiators of the organic peroxide type. ) The use of organic peroxides makes it practically impossible to incorporate photochromic molecules in the mixture of monomers before polymerization, the peroxides having the effect either of destroying any photochromic effect or of giving the product an unacceptable permanent intense coloration. Also, one is obliged to later incorporate coloring agents into the matrix, most often by a special thermal diffusion process.

Therefore, there continues to be a need for photochromic trans-parent organic materials which have improved photochromic properties and which are easy to manufacture and not very expensive to manufacture.

### Summary of the Invention

Briefly, the invention relates to new photo-chromic transparent organic materials which are particularly useful for the production of photochromic organic ophthalmic lenses. The organic material consists of an optical-quality polymer matrix and at least one coloring agent giving photochromic properties to the matrix. The coloring agent is chosen from the group of the spirooxazines, the spiropyrans, and the chromenes. The polymer of the matrix is chosen from (a) homopolymers of ethyoxylated bisphenol A dimethacrylate having formula I: 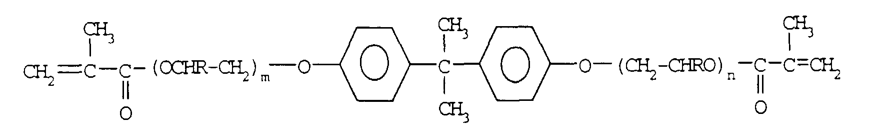 in which R is H or CH₃, and m and n independently represent 1 or 2, and (b) copolymers of ethoxylated bisphenol A dimethacrylate containing, at most, 30 wt% of at least one aromatic monomer with vinyl, acrylic, or methacrylic functionality.

Surprisingly, we have found that the materials of the invention are characterized particularly by a glass transition point, and therefore by a hardness, which is greater than that of many hitherto known organic ophthalmic products without any adverse effects on the darkening and lightening speeds. We have also found that, through the choice of an appropriate mixture of several coloring agents, it is possible to obtain the desired tint in such matrixes, particularly gray or brown, with this tint practically not varying in the course of darkening and lightening.

The inventive organic materials also exhibit a high refractive index, which is in all cases greater than 1.54, and which can be adjusted, if necessary, to the desired value by the use of an appropriate modifying comonomer.

Useful co-monomers for the invention include vinyl, acrylic or methacrylic compounds containing in their formula one or more benzene nuclei. Examples of some useful co-monomers are, divinylbenzene, diallyl phthalate, benzyl or naphthyl acrylates or methacrylates, etc., as well as their derivatives substituted on the aromatic nucleus or nuclei by chlorine or bromine atoms.

In another aspect, the invention also relates to a process for the preparation of the photochromic organic materials of the invention by polymerizing an ethoxylated bisphenol A dimethacrylate, corresponding to formula I: 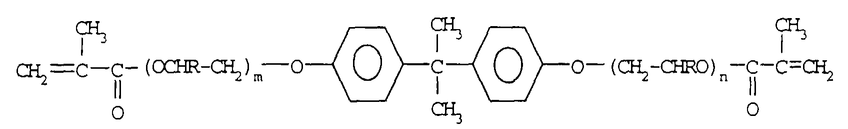 in which R is H or CH₃, and m and n independently represent 1 or 2, optionally with up to 30 wt% of one or more modifying aromatic monomers with vinyl, acrylic or methacrylic functionality, in the presence of a diazo radical initiator and in the absence of a peroxide radical initiator. Preferably, R is H, and m = n = 2.

Preferably, the polymerization is carried out in the presence of at least one photochromic coloring agent, which allows one to color the final material in its mass.

### Detailed Description of the Invention

An essential characteristic of the present process is that it is implemented in the absence of a peroxide radical initiator, the latter being replaced by a diazo initiator. This has the advantage of allowing one to incorporate the photochromic coloring agent in the resin matrix before polymerization of the matrix. Polymerization in the presence of the coloring agent cannot be carried out with a peroxide initiator because the latter may generate a strong initial coloration of the resulting organic glass. The peroxide initiator may also lead to a loss of the photochromic effect. Accordingly, in current processes for the production of organic glasses, when a peroxide initiator is used, a separate coloration step is required in order to re-impart photochromic properties or color back into the glass. As stated earlier, the coloration is generally done for example, by the diffusion of the coloring agent or agents into the glass matrix, usually at elevated temperatures. The preferred inventive process avoids this additional coloring step, and if desired, allows for the production of a photochromic lens in a single step by carrying out the polymerization directly in a lens mold.

Of course, if desired, the coloring agent can be omitted from the polymerizable mixture, and the incorporation of the photochromic coloring agent or agents in the polymerized matrix can be carried out by a conventional thermal diffusion process as described for example, in United States patent nos. 5,130,353, 5,185,390 and 5,180,254. According to the method described in these references, a substrate impregnated with photochromic coloring agent or agents is applied to one surface (usually the convex surface in the case of a lens) of the polymer matrix. The impregnated substrate is then heated to 100-150° C for one to three hours, and finally the substrate is separated from the polymer matrix.

The photochromic coloring agent can be chosen from the general classes of the spirooxazines, spiropyrans and chromenes having photochromic properties. Quite a large number of photochromic coloring agents are described in the literature and are commercially available and are described for example in US patent numbers 5,246,630 and 4,994,208.

Examples of useful spirooxazines for the invention are described in US patent numbers 3,562,172; 4,634,767; 4,637,698; 4,720,547; 4,756,973; 4,785,097; 4,792,224; 4,784,474; 4,851,471; 4,816,584; 4,831,142; 4,909,963; 4,931,219; 4,936,995; 4,986,934; 5,114,621; 5,139,707; 5,233,038; 4,215,010; 4,342,668; 4,699,473; 4,851,530; 4,913,544; 5,171,636; 5,180,524; and 5,166,345, and also in EP-A 0,508,219; 0,232,295; and 0,171,909, among others.

Examples of chromenes that can be used are described also in US-A 3,567,605; 4,889,413; 4,931,221; 5,200,116; 5,066,818; 5,244,602; 5,238,981; 5,106,998; 4,980,089; and 5,130,058 and EP-A 0,562,915.

Useful spiropyrans have been described in the literature, for example, in Photochromism, G. Brown, Ed., Techniques of Chemistry, Wiley Interscience, Vol. III, 1971, Chapter III, pp. 45-294, R.C. Bertelson; and Photochromism, Molecules & Systems, Edited by H. Dürr, H. Bouas-Laurent, Elsevier, 1990, Chapter 8, "Spiropyrans," pp. 314-455, R. Guglielmetti.

On an indicative and nonlimiting basis, the proportion of photochromic coloring agent(s) to be incorporated in the matrix can range from 0.03 to 0.3 wt%, and preferably from 0.05 to 0.1 wt%.

Preferably also, one uses a combination of photochromic coloring agents giving a gray or brown tint in the darkened state.

As diazo radical initiator, it is possible to use azobisisobutyronitrile (AIBN) and 2,2'-azobis(2-methylbutyronitrile), among others. Other examples of useful diazo radical initiators are also described in "Polymer Handbook," by Bandrup and Immergut, p. II-2, John Wiley (1989).

To carry out the polymerization, it is possible, for example, to heat the polymerizable mixture slowly until the beginning of thermal degradation of the diazo compound with release of nitrogen and free radicals. This can occur at a relatively low temperature which depends on the diazo compound which is used (approximately 65° C in the case of AIBN). The polymerization is carried out for several hours, for example, 10-20 hours. One finally proceeds to anneal the structure by heating in successive temperature stages, which can exceed 100° C, and for a duration of approximately 1 hour each.

The invention finally relates to the articles consisting completely or partially of a photochromic organic material according to the invention.

Nonlimiting examples of such articles are lenses for ophthalmic (corrective) glasses or sunglasses, windows for automobiles and other vehicles, windows for buildings, etc. In the articles of the invention, the photochromic organic material of the invention can constitute the whole thickness of the article (solid article) or can be in the form of a film or layer stratified on a transparent organic or mineral support.

Lenses especially ophthalmic lenses, are particularly preferred articles of the invention.

These lenses can be produced conveniently by carrying out the polymerization in lens molds, in a conventional manner, for example, as described in US-A 2,542,386; 3,136,000; and 3,881,683.

The stratified articles can be produced easily by application of the polymerizable mixture (for example, by immersion, by centrifugation, by brush, etc.) to the support and polymerization of said mixture in situ.

### EXAMPLES

In order to suitably understand the invention, the following nonlimiting examples are given. The parts are parts by weight.

### Example 1 (Reference)

Two non-photochromic organic glasses are prepared by the following mode of operation:
A) 100 parts of Diacryl 121 (tetraethoxylated bisphenol A dimethylmethacrylate (formula I in which R = CH₃, and m = n = 2) sold by the AKZO Company) is mixed with 0.25 part azobisisobutyronitrile (AIBN) as initiator. The mixture is polymerized in a lens mold for 16 hours at 65°C in a nitrogen atmosphere. The resulting mold is posthardened for 1 hour at 70°C, for 1 hour at 80°C and for 1 hour at 110°C so as to obtain an organic lens after removal from the mold.
B) In this second stage, operation A is repeated except that the Diacryl 121 is replaced by Diacryl 101 (diethoxylated bisphenol A dimethylmethacrylate (formula I in which R = CH₃, and m = n = 1) sold by the AKZO company).

The physical properties of these glasses, as well as those of a reference organic glass commercially available under the registered brand CR39® and consisting of the homopolymer of diethylene glycol bis(allyl carbonate), are indicated in Table I hereafter.

**Table I.**

| Compared physical properties | | | |
|---|---|---|---|
| | CR39® | Glass Derived From Diacryl 101 | Glass Derived From Diacryl 121 |
| Shore D Hardness | 84 | 89 | 84 |
| Vickers Hardness (N/mm²) | 215 | 490 | 230 |
| Elastic Modulus in GPa | | | |
| by DMA | 3.34 | 5.30 | 3.40 |
| by Vickers | 3.17 | 5.10 | 3.34 |
| Glass Transition T_{g}(max t_{gδ}) | 94°C | 156°C | 107°C |
| Refractive Index n_{D}²⁰ | 1.498 | 1.565 | 1.5575 |

One observes that the polymer materials used in the invention at the same time have mechanical properties that are equivalent to or superior to those of CR39®, the reference product, and a clearly higher refractive index values.

### Example 2

Same process as Examples 1A or 1B, except that a photochromic coloring agent chosen from the table below is incorporated into the polymerization mixture. The coloring agent is dissolved in the monomer with stirring and slight heating.

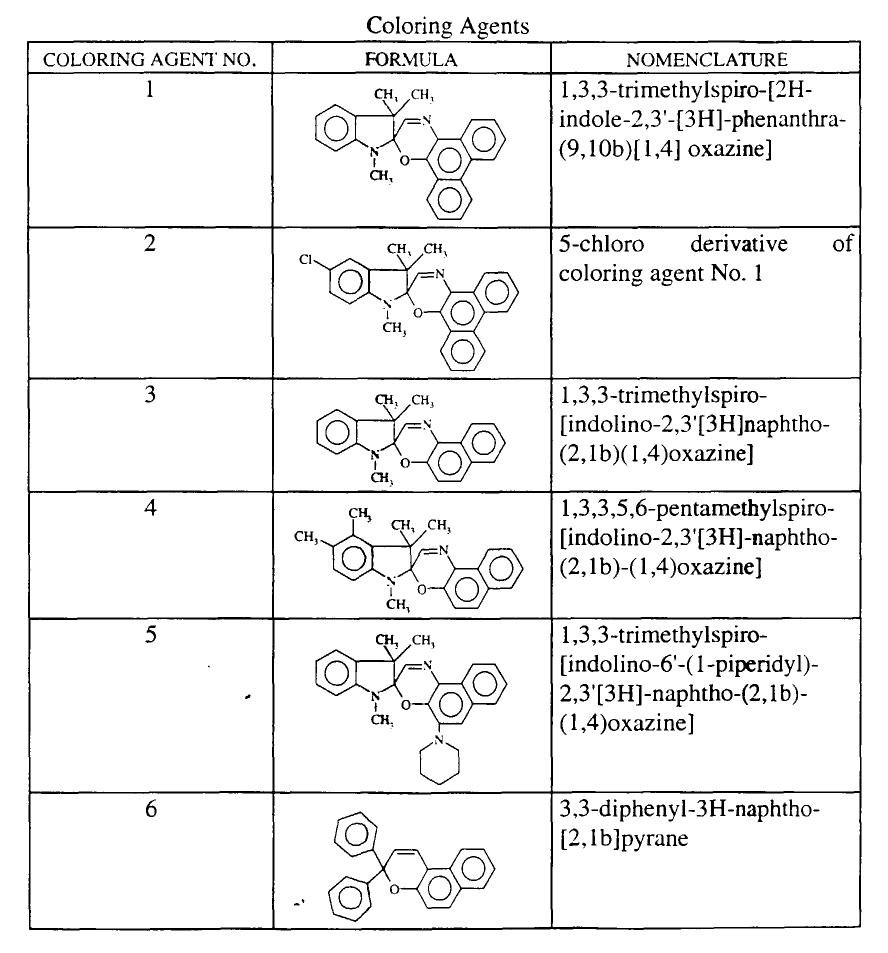

In the photochromic materials or glasses obtained, the times of half-darkening and half-lightening are measured. The light source is a mercury vapor lamp, and the measurement of transmission is done at the wavelength of λₘₐₓ of the coloring agent and at room temperature on a 2-mm-thick sample. Table II below recapitulates the results obtained for various photochromic materials according to the invention.

**Table II**

| Photochromic Glass | Matrix | Tg | Coloring Agent | λₘₐₓ (nm) | Concentration | t_{1/2} Darkening (seconds) | t_{1/2} Lightning (seconds) |
|---|---|---|---|---|---|---|---|
| 1 | Diacryl 101 | 156°C | 3 | 605 | 0.3% | 3 | 4 |
| 2 | Diacryl 101 | --- | 6 | 435 | 0.4% | 4 | 7 |
| 3 | Diacryl 101 | --- | 1 | 605 | 0.05% | 5 | 7 |
| 4 | Diacryl 101 | --- | 2 | 590 | 0.05% | 7 | 11 |
| 5 | Diacryl 122 | 109°C | 3 | 605 | 0.3% | 3 | 4 |
| 6 | Diacryl 121 | --- | 4 | 605 | 0.2% | 3 | 6 |

The examples above show that, regardless of the type of photochromic compound used, one observes with all the glasses of the invention rapid kinetics of darkening as well as lightening, in spite of the high T_{g} values of the resins, particularly in the case of Diacryl 101 (T_{g} = 156°C), with the best mode being represented by photochromic glass 1.

### Example 3

A photochromic lens with a gray tint is prepared according to the mode of operation of Example 1A, except that one incorporates in the polymerization mixture 0.2 part No. 4 blue coloring agent, 0.025 part No. 5 red coloring agent and 0.20 part No. 6 yellow coloring agent.

The lens obtained has rapid darkening and lightening properties. The kinetics of the three coloring agents used being similar, the lens keeps its neutral gray tint during the process of darkening, as well as that of lightening. The lens has a good photostability with time as shown by the results presented in Table III below, of transmittance measurements before and after 283 hours of exposure at a wavelength of 560 nm (60,000-lux xenon lamp) at 20° C.

**Table III**

| Transmittance | Before | After |
|---|---|---|
| To⁹¹⁰ | 84.9% | 82.5% |
| T_{D15}⁽²⁾ | 26.5% | 28.1% |
| T_{F5}⁽³⁾ | 72.7% | 71.6% |
| Tₒ corresponds to the initial transmission of the lens. | | |
| T_{D15} = % transmission at 560 nm after 15 min of exposure under the xenon lamp; thickness of sample: 2 mm. | | |
| T_{F5} = % transmission at 560 nm after 15 min of exposure and 5 min of lightening in darkness. | | |

### Example 4

This example illustrates the variant of the process of the invention consisting of incorporating the photochromic coloring agent by diffusion after polymerization.

One prepares a lens according to the mode of operation of Example 1, and therefore not containing any photochromic coloring agents.

One prepares a solution of 1 g of coloring agent No. 4 in 10 g of tetrahydrofuran. One impregnates a disk of filter paper with the solution thus prepared; one applies the filter to the convex front surface of the lens obtained. One maintains the lens under pressure by means of a mineral glass lens with the same radius of curvature as the plastic lens, and one heats it for 2 hours at 130° C. One separates the components, and stoves the lens obtained for 2 hours at 110°C.

The final lens obtained is photochromic with the following characteristics (measured at λₘₐₓ = 616 nm).
Initial transmission Tₒ = 86.6%
Transmission in the darkened state = 13.8%
Half-darkening time t_{1/2} = 3 sec
Half-lightening time t_{1/2} = 4 sec

The results obtained (kinetics) are completely comparable to those obtained by incorporation in the matrix beforehand (see Example 2).

## Claims

1. Photochromic transparent organic materials having a high refractive index greater than 1.54, consisting of an optical quality polymer matrix and at least one coloring agent giving photochromic properties to said matrix ; the coloring agent being selected from the group consisting of spirooxazines, spiropyrans, and chromenes and the polymer of the matrix being selected from the group consisting of (a) homopolymers of ethoxylated bisphenol A dimethylacrylate with formula I: 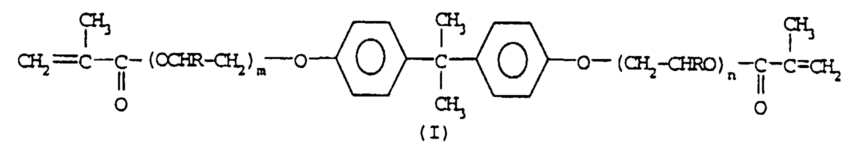 in which R is H or CH₃, and m and n independently represent 1 or 2,
and (b) copolymers of ethoxylated bisphenol A dimethylacrylate of the above formula I containing at most 30 weight percent of at least one aromatic monomer with vinyl, acrylic or methacrylic functionality.

2. The materials according to claim 1, wherein in formula I, R = H and m = n = 2.

3. The materials according to claim 1 or 2, wherein the polymer of the matrix is a copolymer of the (b) type.

4. The materials according to any one of claims 1 to 3, wherein the aromatic monomer is selected from the group consisting of divinylbenzene, diallyl phthalate, benzyl methacrylate, benzyl acrylate, naphthyl methacrylate and naphthyl acrylate.

5. The materials according to any one of claims 1 to 4, wherein they contain a mixture of photochromic coloring agents giving a gray or brown tint to the glass in a darkened state not varying in the course of darkening and lightening.

6. A process for preparing a photochromic transparent organic material according to any one of claims 1 to 5, wherein it comprises the steps of polymerizing a polymer selected from the group consisting of (a) homopolymers of ethoxylated bisphenol A dimethylacrylate with formula I : 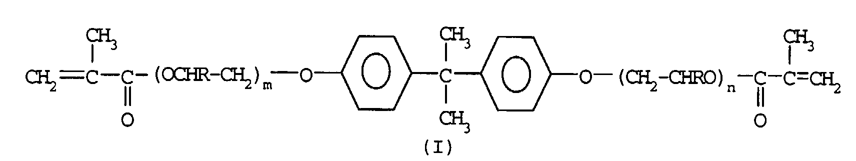 in which R is H or CH₃, and m and n independently represent 1 or 2, and
(b) copolymers of ethoxylated bisphenol A dimethylacrylate of the above formula I containing at most 30 weight percent of an aromatic monomer with vinyl, acrylic or methacrylic functionality ;
said polymer being polymerized in the presence of a diazo radical initiator and in the absence of a peroxide radical initiator.

7. The process according to claim 6, wherein the polymerization is carried out in the presence of at least one photochromic coloring agent selected from the group consisting of spirooxazines, spiropyrans and chromenes.

8. The process according to claim 6, further comprising the step of incorporating at least one photochromic coloring agent selected from the group consisting of spirooxazines, spiropyrans and chromenes into the polymer matrix.

9. The process according to claim 8, wherein the photochromic coloring agent is incorporated by a process of thermal diffusion.

10. Photochromic articles comprising the transparent photochromic organic materials according to any one of claims 1 to 5.

11. An ophthalmic lens comprising the transparent photochromic organic material according to anyone of claims 1 to 5.

## Patentansprüche

1. Photochrome, transparente, organische Materialien mit einem hohen Brechungsindex von größer als 1,54, bestehend aus einer Polymermatrix optischer Qualität und mindestens einem Farbmittel, welches der Matrix photochrome Eigenschaften verleiht; wobei das Farbmittel ausgewählt ist aus der Gruppe bestehend aus Spirooxazinen, Spiropyranen und Chromenen und das Polymer der Matrix ausgewählt ist aus der Gruppe bestehend aus (a) Homopolymeren von ethoxyliertem Bisphenol-A-Dimethylacrylat der Formel I: 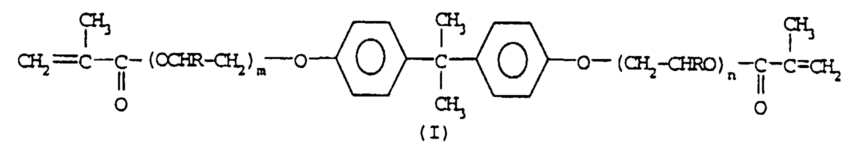 worin R H oder CH₃ ist und m und n unabhängig voneinander für 1 oder 2 stehen,
und (b) Copolymeren von ethoxyliertem Bisphenol-A-dimethacrylat der obenstehenden Formel I, enthaltend höchstens 30 Gew.-% mindestens eines aromatischen Monomeren mit Vinyl-, Acryl- oder Methacrylfunktionalität.

2. Materialien gemäß Anspruch 1, wobei in Formel I R = H und m = n = 2 ist.

3. Materialien gemäß Anspruch 1 oder 2, wobei das Polymer der Matrix ein Copolymer des Typs (b) ist.

4. Materialien gemäß mindestens einem der Ansprüche 1 bis 3, wobei das aromatische Monomer ausgewählt ist aus der Gruppe bestehend aus Divinylbenzol, Diallylphthalat, Benzylmethacrylat, Benzylacrylat, Naphthylmethacrylat und Naphthylacrylat.

5. Materialien gemäß mindestens einem der Ansprüche 1 bis 4, wobei sie eine Mischung aus photochromen Farbmitteln enthalten, die Glas eine graue oder braune Tönung verleihen, die sich im Verlauf der Verdunkelung und Erhellung nicht verändert.

6. Verfahren zur Herstellung eines photochromen, transparenten, organischen Materials gemäß mindestens einem der Ansprüche 1 bis 5, wobei dieses die Schritte der Polymerisierung eines Polymers, ausgewählt aus der Gruppe bestehend aus (a) Homopolymeren von ethoxyliertem Bisphenol-A-dimethylacrylat der Formel I umfaßt: 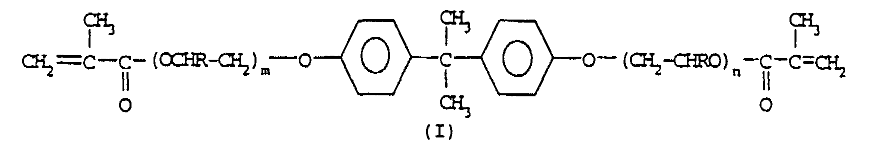 worin R H oder CH₃ ist und m und n unabhängig voneinander für 1 oder 2 stehen, und
(b) Copolymeren von ethoxyliertem Bisphenol-A-dimethylacrylat der obenstehenden Formel I, enthaltend höchstens 30 Gew.-% eines aromatischen Monomeren mit Vinyl-, Acryl- oder Methacrylfunktionalität;
wobei das Polymer in Gegenwart eines Diazo-Radikal-Initiators und in Abwesenheit eines Peroxid-Radikal-Initiators polymerisiert wird.

7. Verfahren gemäß Anspruch 6, wobei die Polymerisation in Gegenwart von mindestens einem photochromen Farbmittel, ausgewählt aus der Gruppe bestehend aus Spirooxazinen, Spiropyranen und Chromenen, durchgeführt wird.

8. Verfahren gemäß Anspruch 6, weiterhin umfassend den Schritt des Einbringens mindestens eines photochromen Farbmittels, ausgewählt aus der Gruppe bestehend aus Spirooxazinen, Spiropyranen und Chromenen, in die Polymermatrix.

9. Verfahren gemäß Anspruch 8, wobei das photochrome Farbmittel durch ein Verfahren der Thermodiffusion eingebracht wird.

10. Photochrome Artikel, umfassend die transparenten, photochromen, organischen Materialien gemäß mindestens einem der Ansprüche 1 bis 5.

11. Augenlinse, umfassend das transparente, photochrome, organische Material gemäß mindestens einem der Ansprüche 1 bis 5.

## Revendications

1. Matériaux organiques transparents photochromiques ayant un haut indice de réfraction supérieur à 1,54, constitués d'une matrice de polymère de qualité optique et d'au moins un agent colorant conférant des propriétés photochromiques à ladite matrice ; l'agent colorant étant choisi dans le groupe consistant en les spirooxazines, les spiropyranes et les chromènes et le polymère de la matrice étant choisi dans le groupe constitué (a) des homopolymères de diméthacrylate de bisphénol A éthoxylé de formule I : 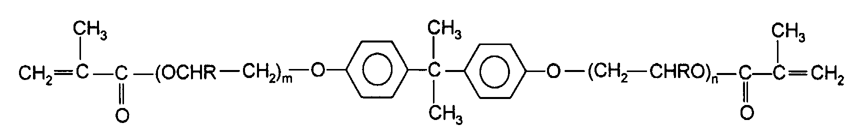 dans laquelle R est H ou CH₃, et m et n représentent indépendamment 1 ou 2,
et (b) des copolymères du diméthacrylate de bisphénol A éthoxylé de formule I ci-dessus contenant au plus 30 % en masse d'au moins un monomère aromatique à fonctionnalité vinyle, acrylique ou méthacrylique.

2. Matériaux selon la revendication 1, où dans la formule I, R = H et m = n = 2.

3. Matériaux selon la revendication 1 ou 2, où le polymère de la matrice est un copolymère de type (b).

4. Matériaux selon l'une quelconque des revendications 1 à 3, où le monomère aromatique est choisi dans le groupe consistant en le divinylbenzène, le phtalate de diallyle, le méthacrylate de benzyle, l'acrylate de benzyle, le méthacrylate de naphtyle et l'acrylate de naphtyle.

5. Matériaux selon l'une quelconque des revendications 1 à 4, qui contiennent un mélange d'agents colorants photochromiques conférant au verre une teinte grise ou brune qui ne varie pas au cours de l'assombrissement et de l'éclaircissement.

6. Procédé de préparation d'un matériau organique transparent photochromique selon l'une quelconque des revendications 1 à 5, qui comprend les étapes de polymérisation d'un polymère choisi dans le groupe constitué (a) des homopolymères de diméthacrylate de bisphénol A éthoxylé de formule I : 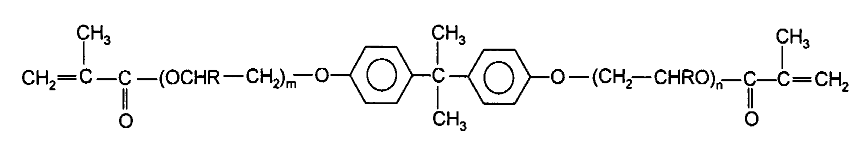 dans laquelle R est H ou CH₃ et m et n représentent indépendamment 1 ou 2,
et (b) des copolymères du diméthacrylate de bisphénol A éthoxylé de formule I ci-dessus contenant au plus 30 % en masse d'un monomère aromatique à fonctionnalité vinyle, acrylique ou méthacrylique ;
ledit polymère étant polymérisé en présence d'un amorceur radicalaire diazoïque et en l'absence d'un amorceur radicalaire peroxydique.

7. Procédé selon la revendication 6, où la polymérisation est mise en oeuvre en présence d'au moins un agent colorant photochromique choisi dans le groupe consistant en les spirooxazines, les spiropyranes et les chromènes.

8. Procédé selon la revendication 6, comprenant en outre l'étape d'incorporation d'au moins un agent colorant photochromique choisi dans le groupe consistant en les spirooxazines, les spiropyranes et les chromènes dans la matrice de polymère.

9. Procédé selon la revendication 8, où l'agent colorant photochromique est incorporé par un procédé de diffusion thermique.

10. Articles photochromiques comprenant les matériaux organiques photochromiques transparents selon l'une quelconque des revendications 1 à 5.

11. Lentille ophtalmique comprenant le matériau organique photochromique transparent selon l'une quelconque des revendications 1 à 5.
